Europäisches Patentamt

European Patent Office

Office européen des brevets

(19)

(11) Numéro de publication: **0 275 854**
**A1**

## DEMANDE DE BREVET EUROPEEN

(12)

(21) Numéro de dépôt: 87870164.8

(22) Date de dépôt: 01.12.87

(51) Int. Cl.⁴: **C08K 9/04** , C01G 11/00

(30) Priorité: 01.12.86 LU 86692

(43) Date de publication de la demande:
27.07.88 Bulletin 88/30

(84) Etats contractants désignés:
ES GR

(71) Demandeur: **S.A. FLORIDIENNE - CHIMIE N.V.**
**Boîte 45 Avenue Louise, 479**
**B-1050 Bruxelles(BE)**

(72) Inventeur: **Vandenberghe, Marcel**
**Chaussée de Monsieur 414 B**
**B-7810 Maffle(BE)**

(74) Mandataire: **Van Malderen, Michel et al**
**p.a. Freylinger & Associés 22 avenue J.S.**
**Bach (bte 43)**
**B-1080 Bruxelles(BE)**

(54) Oxyde de cadmium stabilisé, procédé pour sa préparation et utilisation de celui-ci.

(57) On décrit un oxyde de cadmium stabilisé, non pulvérulent destiné à la préparation de stabilisants et/ou lubrifiants pour résines synthétiques, qui contient, en plus de l'oxyde de cadmium, au moins 5% d'un adjuvant classique compatible avec la mise en oeuvre du stabilisant et/ou lubrifiant et de la résine.

Le produit est obtenu par mélange intime d'oxyde de cadmium frais et d'au moins un adjuvant du type susmentionné, dans le rapport compris entre 5/95 et 50/50 et en soumettant le mélange ainsi obtenu à une étape de granulation connue en soi.

Le produit sert à la production de stabilisants et/ou lubrifiants destinés à des résines synthétiques.

EP 0 275 854 A1

# OXYDE DE CADMIUM STABILISÉ, PROCÉDÉ POUR SA PRÉPARATION ET UTILISATION DE CELUI-CI

## Objet de l'invention

La présente invention est relative à de l'oxyde de cadmium stabilisé en vue notamment de son utilisation comme matière première pour la fabrication des savons de cadmium (sels d'acides gras) qui sont utilisés à titre de stabilisants et/ou de lubrifiants dans le domaine des résines synthétiques.

L'invention s'étend également au procédé pour la préparation d'un tel oxyde stabilisé et à son utilisation.

## Problèmes techniques à la base de l'invention

Il est bien connu que le cadmium, métal lourd, ainsi que ses composés sont particulièrement toxiques pour les organismes vivants. Par ailleurs, la dissémination du cadmium dans l'environnement s'est accrue de manière alarmante, les dernières années. Des législations sévères relatives aux lieux de fabrication et/ou d'utilisation ainsi qu'au transport de ce métal lourd ont été mises en application.

C'est ainsi qu'en République Fédérale d'Allemagne, des normes très sévères existent à cet égard. Selon le paragraphe 48 du Bundes-Immissionsschutzgesetzes (BlmSchG) du 15 mars 1974 (BGBl.I page 721); - Kabinettbeschluß du 24.7.1985 (TA Luft) on relève les valeurs suivantes pour le cadmium et les composés inorganiques du cadmium comme constituants des poussières exprimées sous forme de cadmium : 0,04 $\mu g/m^3$ et 5 $\mu$ $g/m^2 d$, respectivement pour les rejets à l'atmosphère et pour le mi lieu de travail. Les valeurs correspondantes pour le plomb et les composés inorganiques du plomb qui est cependant également considéré comme hautement toxique sont 2,0 $\mu g/dm^3$ et 0,25 $mg/m^2 d$.

L'oxyde de cadmium se présente généralement l'état pulvérulent avec une granulométrie proche du micron. De plus, la poudre d'oxyde de cadmium est peu coulable et ses caractéristiques physiques rendent difficile toute manipulation du produit par mise en silo, convoyage pneumatique ou par un dispositif mécanique. Des mesures de prévention et de protection impliquant la mise en oeuvre de dispositifs et installations particulièrement onéreuses sont nécessaires pour répondre aux exigences imposées par les législations actuellement en vigueur.

En outre, l'oxyde de cadmium est difficilement stockable pendant une période prolongée, étant donné qu'une carbonatation progressive a lieu, réduisant ainsi la qualité de la matière première utilisée dans la fabrication des stabilisants et lubrifiants au cadmium et, éventuellement, la qualité du stabilisant ou lubrifiant préparé. L'oxyde de cadmium tend également prendre l'humidité et à s'agglomérer au cours du stockage, ce qui rend ses manipulations encore moins aisées. Ces caractéristiques exigent un stockage à l'abri de l'air et de l'humidité, de préférence en fûts parfaitement fermés dont le transport est particulièrement onéreux et entraînent des difficultés élevées en ce qui concerne les manipulations, notamment à l'aide d'installations de convoyage à l'aide d'air sec ou d'azote.

On constate de plus que l'oxyde de cadmium non traité est adhérant aux fûts dans lesquels il est transporté et que la décontamination en est particulièrement difficile. Il présente de plus une densité apparente faible. La toxicité du produit en soi, l'adhérence mentionnée et la difficulté de dépollution sont tels que les utilisateurs renvoyent les fûts au producteur plutôt que de les détruire sur place. Compte tenu de la faible densité apparente du produit, ceci représente des frais commerciaux importants.

Le compactage de l'oxyde de zirconium pourrait apporter une solution à ce problème mais on observe que dans ce cas le produit obtenu ne se prête pas à une transformation de la matière première en savons de cadmium par réaction avec des acides gras à cause de la trop faible réactivité du produit compacté.

Le mouillage de la poudre qui est une solution quelque fois adoptée pour les composés toxiques est absolument inadéquat en l'occurence car l'oxyde de cadmium réagirait avec l'eau en formant l'hydroxyde correspondant.

## Buts visés par l'invention

Le but de la présente invention consiste à traiter l'oxyde de cadmium de manière telle qu'il se présente sous une forme non pulvérente plus stable, c'est-àdire notablement moins sensible à l'humidité de l'air et moins toxique pour l'environnement, en fournissant une matière de départ équivalente à l'oxyde de cadmium pour la fabrication des stabilisants et/ou lubrifiants destinés aux résines synthétiques.

Un but subsidiaire de la présente invention vise à fournir de l'oxyde de cadmium traité de manière à obtenir un produit destiné à la fabrication de stabilisants et/ou lubrifiants, qui est facile à manipuler, à convoyer, à stocker et à transporter, n'exigeant pas, de ce fait, des installations onéreuses.

On vise également à titre complémentaire à obtenir un produit n'adhérant que peu aux parois du fût ou autres récipients destinés à le contenir.

Le traitement auquel l'oxyde de cadmium est soumis ne doit pas altérer de façon importante la réactivité d'oxyde de cadmium. Le produit doit notamment facile ment se déliter et se disperser dans l'acide gras fondu et ceci sans émission de produits toxiques.

## Caractéristiques essentielles de l'invention

Selon la présente invention, l'oxyde de cadmium stabilisé, non pulvérulent contient de l'oxyde de cadmium et au moins un adjuvant compatible avec la mise en oeuvre du stabilisant et/ou lubrifiant et de la résine synthétique laquelle il est destiné, une partie de l'oxyde de cadmium et de l'adjuvant pouvant avoir réagi au moins partiellement entre eux.

On constate que l'oxyde de cadmium stabilisé conforme à la présente invention se présente sous une forme non pulvérulente facile à manipuler dans des installations classiques de stockage et de convoyage sans qu'il ne soit nécessaire de prendre des dispositions particulières et onéreuses pour ce qui concerne la pollution de l'environnement.

On constate également que l'oxyde de cadmium stabilissé conforme à la présente invenion est substantiellement moins sensible à la prise d'humidité et à la carbonatation. Cette propriété facilite également sa manipulation et maintient la constance de qualité chimique.

Il a également été constaté que l'état dans lequel se présente l'oxyde de cadmium stabilisé conforme à la présente invention n'influence guère la fabrication du stabilisànt et/ou lubrifiant préparé à partir de celui-ci, ni la fabrication de la résine contenant un stabilisant et/ou lubrifiant obtenu à partir de l'oxyde de cadmium stabilisé conforme à la présente invention.

Selon la présente invention, l'adjuvant est choisi parmi le groupe constitué par les acides gras et les dérivés de ceux-ci, l'état saturé ou insaturé, les agents lubrifiants, agents complexants, agents antioxydants, plastifiants, savons métalliques et cires.

Avantageusement, on utilisera bien entendu un acide gras correspondant en proportions prépondérantes à l'acide gras du savon de cadmium auquel est destiné l'oxyde de cadmium traité selon l'invention. On choisira par exemple la stéarine si l'oxyde de cadmium stabilisé selon l'invention est destiné à produire un stéarate de cadmium.

Avantageusement, l'oxyde de cadmium stabilisé conforme à la présente invention contient au moins 5% d'adjuvant, dont une partie au moins a éventuellement réagi avec l'oxyde de cadmium. Pour des raisons économiques et pratiques, il n'est pas avantageux de dépasser une teneur en adjuvant supérieure à 50%, bien que des teneurs de cet ordre ne sont pas exclues du cadre de l'invention. De préférence, il contient environ 15% en poids d'adjuvant et 85% en poids d'oxyde de cadmium, une partie au moins des constituants ayant réagi entre eux.

L'oxyde de cadmium stabilisé selon la présente invention peut se présenter sous forme de billes, d'écailles, de spaghettis, de granules, de perles, de pastilles, etc.

La présente invention est également relative à un procédé pour la préparation de l'oxyde de cadmium stabilisé conforme à la présente invention. On mélange intimement l'oxyde de cadmium frais et au moins un adjuvant du type susmentionné, dans le rapport compris entre 5/95 et 50/50, et on soumet le mélange ainsi obtenu à une étape de granulation connue en soi. Ces techniques sont classiques et on peut citer l'extrusion et la granulation par friction ou autre, l'encapsulage, le compactage, le laminage et la pulvérisation, certaines de ces techniques, impliquant un chauffage au moins local du mélange et par conséquent un ramollissement ou une fusion des constituants.

Les exemples qui suivent sont donnés en vue de l'illustration de la présente invention sans but limitatif.

## Exemple 1

Dans un mélangeur de laboratoire de 10 litres, à vitesse variable, muni d'une double enveloppe permettant le chauffage (eau chaude) et le refroidissement (eau froide), on engage 1 kg d'oxyde de cadmium en poudre et 150 g d'acide stéarique du commerce.

On rend le mélange homogène en agitant quelques minutes puis on chauffe sous agitation jusqu'à atteindre une température de la masse de 70 à 80 degrés centigrades.

On assiste a une densification très poussée de la poudre suivie d'un début de fusion. Selon la température et la friction à ce moment, on assiste à une agglomération sous forme de grosses boules ou sous forme d'un "anneau fondu" ayant la consistance du mastic.

On refroidit alors le mélangeur extérieurement par de l'eau froide. La matière se transforme peu à peu en granules peu poussièreux qui conviennent très bien pour alimenter les nombreuses machines bien connues, utilisées dans les différentes techniques de granulation citées ci-dessus.

### Exemple 2

100 kg d'oxyde de cadmium et 15 kg d'acide stéarique sont mélangés intimement dans un mélangeur classique, utlisé dans l'industrie du PVC. Dès homogénéisation du mélange, on règle les conditions de chauffage et de vitesse de façon à atteindre une température de 110 degrés environ. Il est alors possible de sortir du mélangeur une masse ramollie qui, après passage sur une bande de laminage et de refroidissement, sera transformée par un dispositif à broches en écailles de quelques mm² de surface.

Le produit, contrairement au produit pulvérulent traditionnel, ne dégage pas de poussière et permet de réduire d'une façon appréciable les mesures de précaution pour éviter les intoxications.

Il possède une stabilité tant au point de vue physique que chimique. Ceci entraîne divers avantages que ce soit au niveau de la constance de qualité chimique que l'on pourra garantir à l'utilisateur ou au niveau du stockage qui peut être alors envisagé à plus long terme.

Le produit conforme à l'invention, par sa présentation, possède de bonnes propriétés d'écoulement. Il permet des dosages en "continu" à partir de silos d'approvsionnement. Toute manipulation du produit par des techniques de convoyage pneumatique ou autre système d'alimentation mécanique sont alors aussi permises. Il n'a pas de tendance marquée à adhérer aux fûts contrairement à l'oxyde de cadmium non traité.

Il permet également lors de sa mise en oeuvre, une "dispersibilité" parfaite. Celle-ci est conforme aux essais habituellement utilisés par les fabricants de savons pour, par exemple, évaluer la réactivité de l'oxyde de cadmium.

Le produit conforme à l'invention, possède enfin un rapport poids/volume très élevé et avantageux à bien des égards : par exemple, économies réalisées lors du transport, lors de la conception des installations de stockage. Ce produit est environ 3 fois plus dense que l'oxyde de cadmium classique.

### Revendications

1. Oxyde de cadmium stabilisé, non pulvérulent destiné à la préparation de stabilisants et/ou lubrifiants de résines synthétiques caractérisé en ce qu'il contient de l'oxyde de cadmium et au moins un adjuvant compatible avec la mise en oeuvre du stabilisant et/ou lubrifiant et de la résine synthétique à laquelle il est destiné, une partie de l'oxyde de cadmium et de l'djuvant ayant éventuellement réagi au moins partiellement entre eux.

2. Oxyde de cadmium stabilisé, non pulvérulent selon la revendication 1 caractérisé en ce que l'adjuvant est choisi parmi le groupe constitué par les acides gras et les dérivés de ceux-ci, à l'état saturé ou insaturé, les agents lubrifiants, agents complexants, agents anti-oxydants, plastifiants, savons métalliques et cires.

3. Oxyde de cadmium stabilisé, non pulvérulent selon la revendication 1 ou 2 caractérisé en ce qu'il contient au moins 5% d'adjuvant dont une partie au moins a éventuellement réagi avec l'oxyde de cadmium.

4. Oxyde de cadmium stabilisé, non pulvérulent selon 1'une quelconque des revendications précédentes caractérisé en ce qu'il contient. tout au plus 50% d'adjuvant dont une partie au moins a éventuellement réagi avec l'oxyde de cadmium.

5. Oxyde de cadmium stabilisé, non pulvérulent selon l'une quelconque des revendications précédentes caractérisé en ce qu'il contient 15% en poids d'adjuvant et 85% en poids d'oxyde de cadmium, une partie au moins des constituants ayant éventuellement réagi entre eux.

6. Procédé pour la préparation de l'oxyde de cadmium stabilisé, non pulvérulent selon l'une quelconque des revendications précédentes caractérisé en ce qu'on mélange intimement l'oxyde de cadmium frais et au moins un adjuvant du type susmentionné, dans le rapport compris entre 5/95 et 50/50, et on soumet le mélange ainsi obtenu à une étape de granulation connue en soi.

7. Procédé selon la revendication 6 caractérisé en ce qu'on combine la granulation à un chauffage au moins local du mélange.

8. Utilisation de l'oxyde de cadmium stabilisé, non pulvérulent pour la fabrication de stabilisants et/ ou lubrifiants destinés à des résines synthétiques.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-4 368 139 (POLLOCK)<br>* Revendications; colonne 2, lignes 22-32 * | 1-8 | C 08 K 9/04<br>C 01 G 11/00 |
| Y | GB-A-1 353 320 (HARDMAN & HOLDEN)<br>* Page 1, lignes 12-27 * | 1-8 | |
| A | US-A-4 173 492 (POLLARD)<br>* Revendications; exemple 1 * | 6,7 | |
| A | WORLD SURFACE COATINGS ABSTRACTS, vol. 50, no. 426, décembre 1977, page 1466, résumé no. 77/7939; & JP-A-77 022 650 (SHOWA DENKO CO.)<br>* Résumé * | 1 | |
| A | CHEMICAL ABSTRACTS, vol. 76, no. 16, 17 avril 1972, page 38, résumé no. 86651s, Columbus, Ohio, US; & JP-A-71 07 175 (MIZUSAWA INDUSTRIAL CHEMICALS, LTD) 23-02-1971 | | |
| A | LU-A- 60 493 (ASSOCIATED LEAD MANUFACTURERS) | | **DOMAINES TECHNIQUES RECHERCHES (Int. Cl.4)**<br><br>C 08 K<br>C 09 C<br>C 01 G |

Le présent rapport a été établi pour toutes les revendications

| Lieu de la recherche | Date d'achèvement de la recherche | Examinateur |
|---|---|---|
| LA HAYE | 10-03-1988 | ZALM W.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
························································
& : membre de la même famille, document correspondant

EPO FORM 1503 03.82 (P0402)